# EUROPEAN PATENT SPECIFICATION

(11) **EP 3 268 407 B1**
(45) Date of publication and mention of the grant of the patent: **09.01.2019**
(21) Application number: 16718937.2
(22) Date of filing: 03.03.2016
(51) Int. Cl.: C08G 18/76, C08G 18/42, C09J 175/16

(54) **CRYSTALLINE THERMOPLASTIC POLYURETHANE COMPOSITION FOR HOT-MELT ADHESIVES**
KRISTALLINE THERMOPLASTISCHE POLYURETHANZUSAMMENSETZUNG FÜR HEISSSCHMELZKLEBSTOFFE
COMPOSITION DE POLYURÉTHANE THERMOPLASTIQUE CRISTALLIN POUR COLLES THERMOFUSIBLES

(30) Priority: 12.03.2015 EP 15382112
(43) Date of publication of application: 17.01.2018
(73) Proprietor: Lubrizol Advanced Materials, Inc., Cleveland, OH 44141-3247 (US)
(72) Inventor: GALISTEO ALMIRON, Barbara M., 08160 Montmelo (Barcelona) (ES); SALVATELLA RADRESA, Daniel, 08160 Montmelo (Barcelona) (ES); SERNA, Jesus Santamaria, 08160 Montmelo (Barcelona) (ES); LOWENBERG, Gonzalo, 08160 Montmelo (Barcelona) (ES)
(74) Representative: Bradley, Josephine Mary
(86) International application number: PCT/US2016/020598
(87) International publication number: WO 2016/144676

(56) References cited:
- WO-A1-2012/016961
- GB-A- 781 469
- US-A- 5 019 638

## Description

The disclosed technology relates to a crystalline thermoplastic polyurethane composition useful as a hot-melt adhesive, wherein the crystalline thermoplastic polyurethane in accordance with the present invention provides superior properties including higher melting point, heat resistance, abrasion resistance, resilience, and faster processing times.

### BACKGROUND OF THE INVENTION

Hot-melt adhesive (HMA), also known as hot glue, are adhesive systems which are solid at room temperature, become tacky or sticky upon heating, and typically solidify rapidly at ambient temperatures to develop internal strength and cohesion. Hot-melt adhesives are one part, solvent free thermoplastic adhesives which are characterized by low to medium viscosity when applied at the required dispensing temperature. Once applied, hot-melt adhesives cool and solidify to form a strong bond between articles. In the solid state, hot-melt adhesives can vary in physical properties from soft, rubbery and very tacky to hard and rigid. Bonds formed with thermoplastic hot-melt adhesives are reversible. Under sufficiently high thermal stress, thermoplastic hot-melt adhesives will liquefy and lose their cohesive strength.

HMA based on conventional thermoplastic polyurethane(TPU), for example, TPU using polycaprolactone as the polyol component, are characterized by melting points in the range of 60-70 °C. In addition, these conventional TPU compositions exhibit crystallization times upwards of 20 minutes. Properties, such as higher melting point, which increases the heat and abrasion resistance, resilience, and faster processing times (e.g. melting and crystallization) would be desirable in TPU compositions used as hot-melt adhesives.

### SUMMARY OF THE INVENTION

The technology disclosed herein includes a crystalline thermoplastic polyurethane composition useful as a hot-melt adhesive. The crystalline thermoplastic polyurethane comprises the reaction product of an isocyanate component, a polyol component, wherein the polyol component comprises polybutanediol succinate, optionally, a chain extender component, and optionally, a catalyst.

In one embodiment of the present invention, a crystalline thermoplastic polyurethane composition comprises the reaction product of a polyisocyanate component, a polyol component, specifically, polybutanediol succinate, optionally a chain extender component, and optionally, a catalyst.

In another embodiment, a crystalline thermoplastic polyurethane composition comprises the reaction product of a polyisocyanate component and polybutanediol succinate having a molecular weight of 3000 to 6000 Daltons, for example about 4000 to 6000 Daltons, optionally a chain extender component, and optionally, a catalyst.

In one embodiment of the invention, the crystalline thermoplastic polyurethane composition comprises the reaction product of an isocyanate component, polybutanediol succinate and up to about 20% by weight of a co-polyester, optionally a chain extender component, and optionally, a catalyst.

In one embodiment of the invention, the crystalline thermoplastic polyurethane composition comprise the reaction product of an isocyanate component, polybutanediol succinate and up to about 50% by weight of a co-polyether, optionally a chain extender component, and optionally, a catalyst.

In one embodiment, the crystalline thermoplastic polyurethane composition may have a melting point of 80 °C to 130 °C and a Tg of about -25 °C to about -35 °C.

In one useful embodiment, the crystalline thermoplastic polyurethane composition may have a recrystallization time after melting of less than five minutes.

The present invention also encompasses a hot-melt adhesive comprising a crystalline thermoplastic polyurethane composition as described herein.

These elements are described in more detail below.

The TPU compositions disclosed herein demonstrate various properties which make them superior for use in HMA applications over conventional TPU. Characteristics of the TPU or the present invention include a higher melting point and a lower Tg than conventional TPU. The TPU in accordance with the present invention provides improved heat resistance, abrasion resistance, resilience, and faster crystallization times than other TPU hot-melt adhesives.

### DETAILED DESCRIPTION OF THE INVENTION

Various preferred features and embodiments will be described below by way of non-limiting illustration.

The disclosed technology provides a crystalline thermoplastic polyurethane composition, which may be useful as a hot-melt adhesive. TPU compositions are generally made from the reaction of a) a polyol component, b) a polyisocynate component, and c) optionally, a chain extender component. The reaction may or may not be carried out in the presence of a catalyst.

The TPU compositions of the present invention include an isocyanate component. The isocyanate component may comprise one or more polyisocyanates. In some useful embodiments, the polyisocyanate component includes one or more diisocyanates. Suitable polyisocyanates include aromatic diisocyanates, aliphatic diisocyanates, or combinations thereof. In some embodiments, the polyisocyanate component includes one or more aromatic diisocyanates. In some embodiments, the polyisocyanate component is essentially free of, or even completely free of, aliphatic diisocyanates. In other embodiments, the polyisocyanate component includes one or more aliphatic diisocyanates. In some embodiments, the polyisocyanate component is essentially free of, or even completely free of, aromatic diisocyanates. In some embodiments, mixtures of aliphatic and aromatic diisocyanates may be useful.

Examples of useful polyisocyanates include aromatic diisocyanates such as 4,4'-methylenebis(phenyl isocyanate) (MDI), 1,6-hexamethylene diisocyanate (HDI), m-xylene diisocyanate (XDI), phenylene-1,4-diisocyanate, naphthalene-1,5-diisocyanate, and toluene diisocyanate (TDI); as well as aliphatic diisocyanates such as isophorone diisocyanate (IPDI), 1,4-cyclohexyl diisocyanate (CHDI), decane-1,10-diisocyanate, lysine diisocyanate (LDI), 1,4-butane diisocyanate (BDI), isophorone diisocyanate (PDI), 3,3'-dimethyl-4,4'-biphenylene diisocyanate (TODI), 1,5-naphthalene diisocyanate (NDI), and dicyclohexylmethane-4,4'-diisocyanate (H12MDI). Isomers of these diisocyanates may also be useful. Mixtures of two or more polyisocyanates may be used. In some embodiments, the polyisocyanate is MDI and/or H12MDI. In some embodiments, the polyisocyanate consists essentially of MDI. In some embodiments, the polyisocyanate consists essentially of H12MDI.

The TPU compositions described herein are also made using b) a polyol component. Polyols, which may also be described as hydroxyl terminated intermediates, useful in the present invention include polyester polyols, polyether polyols, and combinations thereof.

Hydroxyl terminated polyester intermediates include linear polyesters having a number average molecular weight (Mₙ) of from about 500 to about 10,000, for example, about 3,000 to about 6,000 Daltons, further for example about 4,000 to about 6,000 Daltons. The molecular weight is determined by assay of the terminal functional groups and is related to the number average molecular weight. The polyester intermediates may be produced by (1) an esterification reaction of one or more glycols with one or more dicarboxylic acids or anhydrides or (2) by transesterification reaction, i.e., the reaction of one or more glycols with esters of dicarboxylic acids. Mole ratios generally in excess of more than one mole of glycol to acid are preferred so as to obtain linear chains having a preponderance of terminal hydroxyl groups. The dicarboxylic acids of the desired polyester can be aliphatic, cycloaliphatic, aromatic, or combinations thereof. Suitable dicarboxylic acids which may be used alone or in mixtures generally have a total of from 4 to 15 carbon atoms and include: succinic, glutaric, adipic, pimelic, suberic, azelaic, sebacic, , isophthalic, terephthalic, cyclohexane dicarboxylic, and the like. Anhydrides of the above dicarboxylic acids such as phthalic anhydride, tetrahydrophthalic anhydride, or the like, can also be used. The glycols which are reacted to form a desirable polyester intermediate can be aliphatic, aromatic, or combinations thereof, and have a total of from 2 to 20 or from 2 to 12 carbon atoms. Suitable examples include ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, and mixtures thereof.

Suitable hydroxyl terminated polyether intermediates include polyether polyols derived from a diol or polyol having a total of from 2 to 15 carbon atoms. In some embodiments, the hydroxyl terminated polyether is an alkyl diol or glycol which is reacted with an ether comprising an alkylene oxide having from 2 to 6 carbon atoms, typically ethylene oxide or propylene oxide or mixtures thereof. For example, hydroxyl functional polyether can be produced by first reacting propylene glycol with propylene oxide followed by subsequent reaction with ethylene oxide. Primary hydroxyl groups resulting from ethylene oxide are more reactive than secondary hydroxyl groups and thus are preferred. Useful commercial polyether polyols include poly(ethylene glycol) comprising ethylene oxide reacted with ethylene glycol, poly(propylene glycol) comprising propylene oxide reacted with propylene glycol, poly(tetramethylene glycol) comprising water reacted with tetrahydrofuran which can be described as polymerized tetrahydrofuran, and which is commonly referred to as PTMEG.

In one useful embodiment, the polyol component of the invention comprises a polyester based on succinic acid: polybutane diol succinate. The succinic acid used to form the polyester may be derived from biomass resources, petroleum resources, or mixtures thereof. When succinic acid is obtained from petroleum resources, malic acid is usually formed as a by-product and incorporated as an impurity into the succinic acid. For example, succinic acid obtained from petroleum resources may contain from 1,500 ppm to 5,000 ppm malic acid. Succinic acid obtained from biomass resources may contain less than 1,500 ppm malic acid and in some cases less than 1,000 ppm malic acid. In some cases, succinic acid obtained from biomass resources may contain 0ppm malic acid.

The polybutane diol succinate has a molecular weight of 3,000 to 6,000 Daltons, for example about 4,000 to about 6,000, further for example about 4,400 to about 6,000, further for example, about 5,000 to about 6,000. In other embodiments, the polybutanediol succinate has a molecular weight that is greater than 4,000, for example, 4,400 or greater, further for example, 5,000 or greater. As shown by the data presented herein, polybutanediol succinate with a molecular weight within these preferred ranges unexpectedly provides the desired melting point and recrystallization times.

In the composition of the present invention, polybutane diol succinate comprises at least 50% by weight of the total polyol component. In some embodiments, polybutane diol comprises at least 60%, at least 70%, at least 75%, at least 80%, at least 90%, at least 95%, or 100% of the total polyol component. In some embodiments, the polyol component consists essentially of polybutanediol succinate.

The polyol component of the present invention may further comprise up to about 50% by weight of a co-polyol, for example up to about 40% by weight, further for example, up to about 30% by weight, even further for example, up to about 20% by weight, and even further for example, up to about 10% by weight. Suitable co-polyols, when present, may include one or more hydroxyl terminated polyesters, one or more hydroxyl terminated polyethers, or mixtures thereof. In one useful embodiment, a co-polyester comprising polyhexanediol succinate, polypropanediol succinate, or combinations thereof, may be used as part of the total polyol component along with the polybutane diol succinate. In some embodiments, the co-polyester, such as polyhexanediol succinate, prolypropanediol succinate, or combinations thereof may be copolymerized with the polybutanediol succinate. In such an embodiment, the copolymerized polyester will have a molecular weight of about 3,000 to about 6,000 Daltons, greater than 5,000 Daltons, or about 5,000 to about 6,000 Daltons. In other embodiments, a physical blend is formed with polybutanediol succinate and a co-polyester. In one useful embodiment, where the polyol component used to form the TPU composition comprise both polybutanediol succinate and a copolyester, the copolyester is present in an amount that is no more than 20% by weight of the total polyol component. In an alternative embodiment, a co-polyether, for example, polytetramethylene glycol, maybe used in amount of up to 50% of the total polyol component. Combinations of co-polyols may also be used provided that the total co-polyester does not exceed 20% by weight of the total polyol component or the total co-polyether does not exceed 50% by weight of the total polyol component. In some embodiments, the polyol component is substantially free of co-polyols. In other embodiments, the polyol component is totally free of co-polyols. In an embodiment where the polyol component comprises both a polyester and a polyether component, the polyester component may consist essentially of polybutanediol succinate.

The TPU compositions described herein are made using optionally c) a chain extender component. Suitable chain extenders include diols, diamines, and combination thereof.

Suitable chain extenders include relatively small polyhydroxy compounds, for example lower aliphatic or short chain glycols having from 2 to 20, or 2 to 12, or 2 to 10 carbon atoms. Suitable examples include ethylene glycol, diethylene glycol, propylene glycol, dipropylene glycol, 1,4-butanediol (BDO), 1,6-hexanediol (HDO), 1,3-butanediol, 1,5-pentanediol, neopentylglycol, 1,4-cyclohexanedimethanol (CHDM), 2,2-bis[4-(2-hydroxyethoxy) phenyl]propane (HEPP), hexamethylenediol, heptanediol, nonanediol, dodecanediol, 3-methyl-1,5-pentanediol, ethylenediamine, butanediamine, hexamethylenediamine, and hydroxyethyl resorcinol (HER), and the like, as well as mixtures thereof. In some embodiments the chain extender includes BDO, HDO, 3-methyl-1,5-pentanediol, or a combination thereof. In some embodiments, the chain extender includes BDO. Other glycols, such as aromatic glycols could be used. In some embodiments, the composition is formed using only less than 8% by weight, for example, less than 5%, further for example, less than 4%, even further for example, less than 3%, further for example, less than 2%, further for example, less than 1%, and even further for example, less than 0.5% by weight of the total reactants of a chain extender. In some embodiments, the TPUs described herein are essentially free of or even completely free of chain extender, for example 1,4 butane diol.

Optionally, one or more polymerization catalysts may be present during the polymerization reaction. Generally, any conventional catalyst can be utilized to react the diisocyanate with the polyol intermediates or the chain extender. Examples of suitable catalysts which in particular accelerate the reaction between the NCO groups of the diisocyanates and the hydroxy groups of the polyols and chain extenders are the conventional tertiary amines known from the prior art, e.g. triethylamine, dimethylcyclohexylamine, N-methylmorpholine, N,N'-dimethylpiperazine, 2-(dimethylaminoethoxy)ethanol, diazabicyclo[2.2.2]octane and the like, and also in particular organometallic compounds, such as titanic esters, iron compounds, e.g. ferric acetylacetonate, tin compounds, e.g. stannous diacetate, stannous octoate, stannous dilaurate, bismuth compounds, e.g. bismuth trineodecanoate, or the dialkyltin salts of aliphatic carboxylic acids, e.g. dibutyltin diacetate, dibutyltin dilaurate, or the like. The amounts usually used of the catalysts are from 0.001 to 0.1 part by weight per 100 parts by weight of polyol component. In some embodiments, the reaction to form the TPU of the present invention is substantially free of or completely free of catalyst.

Various types of optional components can be present during the polymerization reaction, and/or incorporated into the TPU elastomer described above to improve processing and other properties. These additives include but are not limited to antioxidants, such as phenolic types, rheology modifiers, such as hydrophobic or hydrophilic fumed silica, and adhesion promoters, such as malonic acid, fumaric acid, chlorinated rubber, vinyl chloride/vinyl acetate copolymers, vinyl chloride/vinyl acetate/maleic acid terpolymers. Other additives may be used to enhance the performance of the TPU compostion or blended product, such as other resins, including but not limited to coumarone-indene or terpene-phenolic which may help increase the tackiness of the hot-melt adhesive when hot and slow the recrystallization time. All of the additives described above may be used in an effective amount customary for these substances.

These additional additives can be incorporated into the components of, or into the reaction mixture for, the preparation of the TPU resin, or after making the TPU resin. In another process, all the materials can be mixed with the TPU resin and then melted or they can be incorporated directly into the melt of the TPU resin.

The TPU in accordance with the present invention can be manufactured by any known or yet to be developed means known to those of ordinary skill in the art.

For example, the components of this invention: (a) the diisocyanate component, (b) the polyol component, and (c) the optional chain extender component are reacted together to form the TPU useful in this invention. Any known processes to react the reactants may be used to make the TPU. In one embodiment, the process is a so-called "one-shot" process where all the reactants are added to an extruder reactor and reacted. The equivalent weight amount of the diisocyanate to the total equivalent weight amount of the hydroxyl containing components, that is, the polyol intermediate and, if included, the chain extender glycol, can be from about 0.5 to about 1.10, or, from about 0.5 to about 1.0, or from about 0.5 to about 0.90. Reaction temperatures utilizing a urethane catalyst can be from about 175 to about 245 °C, and in another embodiment from 180 to 220 °C.

As another example, the TPU can also be prepared utilizing a pre-polymer process. In the pre-polymer route, the polyol component reacted with generally an equivalent excess of one or more diisocyanates to form a pre-polymer solution having free or unreacted diisocyanate therein. The reaction is generally carried out at temperatures of from about 80 to about 220 °C, or from about 150 to about 200 °C in the presence of a suitable urethane catalyst. Subsequently, a chain extender, as noted above, is added in an equivalent amount generally equal to the isocyanate end groups as well as to any free or unreacted diisocyanate compounds. The overall equivalent ratio of the total diisocyanate to the total equivalent of the polyol intermediate and the chain extender is thus from about can be from about 0.5 to about 1.10, or, from about 0.5 to about 1.0, or from about 0.5 to about 0.90. The chain extension reaction temperature is generally from about 180 to about 250 °C or from about 200 to about 240 °C. Typically, the pre-polymer route can be carried out in any conventional device including an extruder. In such embodiments, the polyol intermediates are reacted with an equivalent excess of a diisocyanate in a first portion of the extruder to form a pre-polymer solution and subsequently the chain extender is added at a downstream portion and reacted with the pre-polymer solution. Any conventional extruder can be utilized, including extruders equipped with barrier screws having a length to diameter ratio of at least 20 and in some embodiments at least 25.

In one embodiment, the ingredients are mixed on a single or twin screw extruder with multiple heat zones and multiple feed ports between its feed end and its die end. The ingredients may be added at one or more of the feed ports and the resulting TPU composition that exits the die end of the extruder may be pelletized.

The preparation of the various polyurethanes in accordance with conventional procedures and methods and since as noted above, generally any type of polyurethane can be utilized, the various amounts of specific components thereof, the various reactant ratios, processing temperatures, catalysts in the amount thereof, polymerizing equipment such as the various types of extruders, and the like, are all generally conventional, and well as known to the art and to the literature.

The described process for preparing the TPU of the invention includes both the "pre-polymer" process and the "one-shot" process, in either a batch or continuous manner. That is, in some embodiments the TPU may be made by reacting the components together in a "one shot" polymerization process wherein all of the components, including reactants are added together simultaneously or substantially simultaneously to a heated extruder and reacted to form the TPU. While in other embodiments the TPU may be made by first reacting the polyisocyanate component with some portion of the polyol component forming a pre-polymer, and then completing the reaction by reacting the pre-polymer with the remaining reactants, resulting in the TPU.

After exiting the extruder, the composition is normally pelletized and stored in moisture proof packaging and is ultimately sold in pellet form. It being understood that the composition would not always need to be pelletized, but rather could be extruded directly from the reaction extruder through a die into a final product profile.

In a useful embodiment of the present invention, the TPU is highly crystalline, for example, more than 80% crystalline, further for example, more than 90% crystalline. In an embodiment, the crystals in the TPU composition are formed by the polyol component, for example, the polyester component; further for example, the polybutane diol succinate.

TPUs of the current invention as described herein are used as hot-melt adhesives. Hot-melt adhesives are solid at room temperature but, upon application of heat, melt to a liquid or fluid state. On cooling, the adhesive regains its solid form. The hard phase(s) formed upon cooling the adhesive imparts all of the cohesion (strength, toughness, creep and heat resistance) to the final adhesive.

For hot-melt adhesives, the melting point of the TPU and the recrystallization or solidification time (the amount of time for the TPU to fully crystalize or solidify after melting) are important features. TPUs with higher melting points provide adhesives having better heat resistance, abrasion resistance, and resilience over TPUs with lower melting points. In addition, the recrystallization time is important because it determines the amount of time required for processing in the manufacture of articles. In one useful embodiment, the melting point measured by dynamic mechanical analysis (DMA) of a hot-melt adhesive comprising a thermoplastic polyurethane as described herein is about 80 °C to about 130 °C, for example, about 90 °C to about 130 °C, further for example, about 110 °C to about 125 °C, and further for example, about 110 °C to about 115 °C. The recrystallization time is defined as the amount of time between the peak of melting for the TPU hot-melt adhesive and the peak of recrystallization as measured by differential scanning calorimetry (DSC) methods. The recrystallization time of a hot-melt adhesive comprising a TPU as described herein is preferably 5 minutes or less, for example, 4 minutes or less, further for example, 3 minutes or less.

### EXAMPLES

Table 1 lists thermoplastic polyurethanes prepared in a one-shot polymerization process wherein the polyol component, diisocyanate component, antioxidant and catalyst (if used) are heated to 130 °C with stirring. After the reaction reaches 130 °C the heat is removed. The material is poured into a mold and placed in an oven at 120 °C for three hours to cure. In the Examples below, PBS is poly(butanediol) succinate; PPBS is copolymerized poly(propane:butane diol) succinate with the diol weight ratio specified; and PBHS is copolymerized poly(butane:hexane diol) succinate with the diol weight ratio specified. All samples contained 0.20% by weight of Irganox 1010 Antioxidant. Catalyst A is bismuth trineodecanoate and Catalyst B is stannous octoate. Polyester, polyether combinations are a physical blend in the proportions noted.

**Table 1**

| **Ex.** | **Polyester** | **Polyether** | **Isocyanate** | **NCO/OH** | **Catalyst** | **Polyester MW** |
|---|---|---|---|---|---|---|
| C-1 | PBS | | MDI | 0.980 | A | 1400 |
| C-2 | PBS | | MDI | 0.910 | A | 2000 |
| C-3 | PBS | | MDI | 0.500 | | 1400 |
| C-4 | PBS | | MDI | 0.500 | | 2300 |
| C-5 | PPBS (25:75) | | MDI | 1.00 | A | 4000 |
| C-6 | PBHS (17:83) | | MDI | 0.85 | A | 3313 |
| 7 | PBS | | MDI | 0.910 | A | 4400 |
| 8 | PBS | | MDI | 1.020 | B | 5600 |
| 9 | PBS | | MDI | 0.93 | A | 4400 |
| 10 | PBS | | HDI | 0.95 | A | 4400 |
| 11 | PBS | | H12MDI | 0.98 | A | 5600 |
| 12 | PBS | | MDI | 0.600 | | 5600 |
| 13 | PBS(90%) | PTHF(10%) | MDI | 0.98 | A | 5600 |
| 14 | PBS(70%) | PTHF(30%) | MDI | 0.98 | A | 5600 |
| 15 | PBS(50%) | PTHF(50%) | MDI | 0.98 | A | 5600 |

Samples prepared according to the Examples above, were melted and the peak melting temperature and the time for the sample to recrystallize were measured. The results are summarized in Table 2.

**Table 2**

| Example | Melt Peak (°C) | Recrystalization Time (minutes) |
|---|---|---|
| C-1 | 103 | 17.2 |
| C-2 | 107 | 10.1 |
| C-3 | 105 | 6.5 |
| C-4 | 108 | 5.7 |
| C-5 | 87.7 | 24.95 |
| C-6 | 94.8 | 16.78 |
| 7 | 122 | 3.9 |
| 8 | 114 | 3.2 |
| 9 | 113.1 | 2.9 |
| 10 | 114.7 | 1.8 |
| 11 | 114.2 | 2.6 |
| 12 | 123 | 1.0 |
| 13 | 113.3 | 2.93 |
| 14 | 121.6 | 3.27 |
| 15 | 120.7 | 3.75 |

Unexpectedly, TPUs prepared in accordance with the present invention showed higher melting points and faster recrystallization times.

Each of the documents referred to above is incorporated herein by reference, including any prior applications, whether or not specifically listed above, from which priority is claimed. The mention of any document is not an admission that such document qualifies as prior art or constitutes general knowledge of the skilled person in any jurisdiction. Except in the Examples, or whether otherwise explicitly indicated, all numerical quantities in this description specifying amounts of materials, reaction conditions, molecular weights, number of carbon atoms, and the like are to be understood as modified by the word "about." It is to be understood that the upper and lower amount, range, and ratio limits set forth herein may be independently combined. Similarly, the ranges and amounts for each element of the invention can be used together with ranges or amounts for any of the other elements.

As used herein, the transitional term "comprising," which is synonymous with "including," "containing," or "characterized by," is inclusive or open-ended and does not exclude additional, un-recited elements or method steps. However, in each recitation of "comprising" herein, it is intended that the term also encompass, as alternative embodiments, the phrases "consisting essentially of' and "consisting of," where "consisting of' excludes any element or step not specified and "consisting essentially of' permits the inclusion of additional un-recited elements or steps that do not materially affect the basic and novel characteristics of the composition or method under consideration.

While certain representative embodiments and details have been shown for the purpose of illustrating the subject invention, it will be apparent to those skilled in this art that various changes and modifications can be made therein without departing from the scope of the subject invention. In this regard, the scope of the invention is to be limited only by the following claims.

## Claims

1. A crystalline thermoplastic polyurethane composition comprising:
the reaction product of (a) a polyisocyanate component, (b) a polyol component, said polyol component comprising polybutanediol succinate having a molecular weight of 3000 to 6000, where the molecular weight is determined by assay of terminal functional groups; (c) optionally, a catalyst; and (d) optionally, a chain extender component.

2. The crystalline thermoplastic polyurethane composition of claim 1, wherein the polybutanediol succinate has a molecular weight of 4000 to 6000.

3. The crystalline thermoplastic polyurethane composition of claim 1 or 2, wherein the polyol component further comprises hexanediol succinate.

4. The crystalline thermoplastic polyurethane composition of claims 1 or 2, wherein the polyol component further comprises up to 50% by weight of a co polyether.

5. The crystalline thermoplastic polyurethane composition of claim 4, wherein the co-polyether comprises polytetramethylene glycol.

6. The crystalline thermoplastic polyurethane composition of any of claims 1 to 5, wherein the chain extender component comprises 1,4-butane diol and/or the polyisocyanate component is selected from diphenyl-methane diisocyanate, hexamethalyne diisocyanate, methylene dicyclohexyl diisocyanate, and isomers and mixtures mixtures thereof.

7. The crystalline thermoplastic polyurethane composition of any of claims 1 to 6 wherein the optional catalyst is selected from bismuth trineodecanoate and stannous octoate.

8. The crystalline thermoplastic polyurethane composition of any of claims 1 to 7 wherein the composition has a melting point of 80 °C to 130 °C.

9. The crystalline thermoplastic polyurethane composition of any of claims 1 to 8, wherein the composition has a melting point of 110 °C to 115 °C.

10. The crystalline thermoplastic polyurethane composition of any of claims 1 to 9, wherein the crystalline thermoplastic polyurethane has a recrystallization time of less than five minutes.

11. The crystalline thermoplastic polyurethane composition of claim 1, wherein the polyol component further comprises up to 20 % by weight of a co-polyester.

12. A hot-melt adhesive comprising the crystalline thermoplastic polyurethane composition of any of claims 1 to 11.

13. A hot-melt adhesive composition comprising:
a thermoplastic polyurethane comprising the reaction product of (a) a polyisocyanate component; (b) a polyol component, said polyol component comprising polybutanediol succinate having a molecular weight of 3,000 to 6,000, where the molecular weight is determined by assay of terminal functional groups; and (c) optionally, a catalyst, wherein the reaction is substantially free of butane diol.

14. The hot-melt adhesive composition of claim 13 wherein the polyol component consists essentially of polybutanediol succinate.

15. A crystalline thermoplastic polyurethane composition comprising:
the reaction product of (a) a polyisocyanate component, (b) a polyol component, wherein said polyol component comprises the reaction product of succinic acid and butane diol and has a molecular weight of 3000 to 6000, where the molecular weight is determined by assay of terminal functional groups; (c) optionally, a catalyst; and (d) optionally, a chain extender component.

## Patentansprüche

1. Kristalline thermoplastische Polyurethanzusammensetzung umfassend:
das Reaktionsprodukt von (a) einer Polyisocyanatkomponente, (b) einer Polyolkomponente, wobei die Polyolkomponente Polybutandiolsuccinat umfasst, das ein Molekulargewicht von 3000 bis 6000 aufweist, wobei das Molekulargewicht durch Assay der endständigen funktionellen Gruppen bestimmt wird; (c) wahlweise einen Katalysator; und (d) wahlweise eine Kettenverlängerungskomponente.

2. Kristalline thermoplastische Polyurethanzusammensetzung nach Anspruch 1, wobei das Polybutandiolsuccinat ein Molekulargewicht von 4000 bis 6000 aufweist.

3. Kristalline thermoplastische Polyurethanzusammensetzung nach Anspruch 1 oder 2, wobei die Polyolkomponente ferner Hexandiolsuccinat umfasst.

4. Kristalline thermoplastische Polyurethanzusammensetzung nach den Ansprüchen 1 oder 2, wobei die Polyolkomponente ferner bis zu 50 Gew.-% eines Copolyethers umfasst.

5. Kristalline thermoplastische Polyurethanzusammensetzung nach Anspruch 4, wobei der Copolyether Polytetramethylenglycol umfasst.

6. Kristalline thermoplastische Polyurethanzusammensetzung nach irgendeinem der Ansprüche 1 bis 5, wobei die Kettenverlängerungskomponente 1,4-Butandiol umfasst und/oder die Polyisocyanatkomponente unter Diphenylmethandiisocyanat, Hexamethylendiisocyanat, Methylendicyclohexyldiisocyanat und Isomeren und Mischungen davon ausgewählt wird

7. Kristalline thermoplastische Polyurethanzusammensetzung nach irgendeinem der Ansprüche 1 bis 6, wobei der wahlweise Katalysator unter Wismuttrineodecanoat und Zinnoctoat ausgewählt wird.

8. Kristalline thermoplastische Polyurethanzusammensetzung nach irgendeinem der Ansprüche 1 bis 7, wobei die Zusammensetzung einen Schmelzpunkt von 80 °C bis 130 °C aufweist.

9. Kristalline thermoplastische Polyurethanzusammensetzung nach irgendeinem der Ansprüche 1 bis 8, wobei die Zusammensetzung einen Schmelzpunkt von 110 °C bis 115 °C aufweist.

10. Kristalline thermoplastische Polyurethanzusammensetzung nach irgendeinem der Ansprüche 1 bis 9, wobei das kristalline thermoplastische Polyurethan eine Umkristallisierungszeit von weniger als fünf Minuten aufweist.

11. Kristalline thermoplastische Polyurethanzusammensetzung nach Anspruch 1, wobei die Polyolkomponente ferner bis zu 20 Gew.-% eines Copolyesters umfasst.

12. Heißschmelzklebstoff umfassend die kristalline thermoplastische Polyurethanzusammensetzung nach irgendeinem der Ansprüche 1 bis 11.

13. Heißschmelzklebstoff umfassend:
ein thermoplastisches Polyurethan umfassend das Reaktionsprodukt von (a) einer Polyisocyanatkomponente, (b) einer Polyolkomponente, wobei die Polyolkomponente Polybutandiolsuccinat umfasst, das ein Molekulargewicht von 3000 bis 6000 aufweist, wobei das Molekulargewicht durch Assay der endständigen funktionellen Gruppen bestimmt wird; und (c) wahlweise einen Katalysator, wobei die Reaktion im Wesentlichen frei von Butandiol ist.

14. Heißschmelzklebstoff nach Anspruch 13, wobei die Polyolkomponente im Wesentlichen aus Polybutandiolsuccinat besteht.

15. Kristalline thermoplastische Polyurethanzusammensetzung umfassend:
das Reaktionsprodukt von (a) einer Polyisocyanatkomponente, (b) einer Polyolkomponente, wobei die Polyolkomponente das Reaktionsprodukt von Bernsteinsäure und Butandiol umfasst und ein Molekulargewicht von 3000 bis 6000 aufweist, wobei das Molekulargewicht durch Assay der endständigen funktionellen Gruppen bestimmt wird; (c) wahlweise einen Katalysator; und (d) wahlweise eine Kettenverlängerungskomponente.

## Revendications

1. Composition de polyuréthane thermoplastique cristallin comprenant:
le produit réactionnel de (a) un constituant polyisocyanate, (b) un constituant polyol, ledit constituant polyol comprenant le succinate de polybutanediol ayant un poids moléculaire de 3000 à 6000, où le poids moléculaire est déterminé par dosage des groupes fonctionnels terminaux; (c) optionnellement, un catalyseur; et (d) optionnellement, un constituant extenseur de chaîne.

2. Composition de polyuréthane thermoplastique cristallin selon la revendication 1, le succinate de polybutanediol ayant un poids moléculaire de 4000 à 6000.

3. Composition de polyuréthane thermoplastique cristallin selon les revendications 1 ou 2, le constituant polyol comprenant en outre du succinate d'hexanediol.

4. Composition de polyuréthane thermoplastique cristallin selon les revendications 1 ou 2, le constituant polyol comprenant en outre jusqu'à 50 % en poids d'un co-polyéther.

5. Composition de polyuréthane thermoplastique cristallin selon la revendication 4, le co-polyéther comprenant du polytétraméthylène glycol.

6. Composition de polyuréthane thermoplastique cristallin selon l'une quelconque des revendications 1 à 5, le constituant extenseur de chaîne comprenant du 1,4-butane diol et/ou le constituant polyisocyanate étant sélectionné parmi le diisocyanate de diphénylméthane, le diisocyanate d'hexaméthylène, le dicyclohexyl diisocyanate de méthylène, et les isomères et mélanges de ceux-ci.

7. Composition de polyuréthane thermoplastique cristallin selon l'une quelconque des revendications 1 à 6, le catalyseur facultatif étant sélectionné parmi le trinéodécanoate de bismuth et l'octoate stanneux.

8. Composition de polyuréthane thermoplastique cristallin selon l'une quelconque des revendications 1 à 7, la composition ayant un point de fusion de 80°C à 130°C.

9. Composition de polyuréthane thermoplastique cristallin selon l'une quelconque des revendications 1 à 8, la composition ayant un point de fusion de 110°C à 115°C.

10. Composition de polyuréthane thermoplastique cristallin selon l'une quelconque des revendications 1 à 9, le polyuréthane thermoplastique cristallin ayant un temps de recristallisation inférieur à cinq minutes.

11. Composition de polyuréthane thermoplastique cristallin selon la revendication 1, le constituant polyol comprenant en outre jusqu'à 20 % en poids d'un co-polyester.

12. Adhésif thermofusible comprenant la composition de polyuréthane thermoplastique cristallin selon l'une quelconque des revendications 1 à 11.

13. Composition adhésive thermofusible comprenant:
un polyuréthane thermoplastique comprenant le produit réactionnel de (a) un constituant polyisocyanate; (b) un constituant polyol, ledit constituant polyol comprenant le succinate de polybutanediol ayant un poids moléculaire de 3000 à 6000, où le poids moléculaire est déterminé par dosage des groupes fonctionnels terminaux; et (c) optionnellement, un catalyseur, la réaction étant sensiblement exempte de butane diol.

14. Composition adhésive thermofusible selon la revendication 13, le constituant polyol étant essentiellement constitué de succinate de polybutanediol.

15. Composition de polyuréthane thermoplastique cristallin comprenant:
le produit réactionnel de (a) un constituant polyisocyanate, (b) un constituant polyol, où ledit constituant polyol comprend le produit réactionnel de l'acide succinique et du butane diol et présente un poids moléculaire de 3000 à 6000, où le poids moléculaire est déterminé par dosage des groupes fonctionnels terminaux; (c) optionnellement, un catalyseur; et (d) optionnellement, un constituant extenseur de chaîne.
